# EUROPEAN PATENT APPLICATION

(11) **EP 1 829 743 A1**
(43) Date of publication of application: **05.09.2007**
(21) Application number: 07462001.4
(22) Date of filing: 02.03.2007
(51) Int. Cl.: B60Q 7/00

(54) **Two-sided multi-function warning triangle**

(30) Priority: 03.03.2006 HU 0600172
(71) Applicant: Hoffmann, Gabor, 6060 Tiszakécske (HU)
(72) Inventor: Hoffmann, Gabor, 6060 Tiszakécske (HU)
(74) Representative: Benkoné Csillag, Lucia

(57) **Abstract**

The invention is a two-sided multi-functional hazard warning triangle that can be opened-closed; forms a flat triangular frame when opened; with a fixed arm (1 B), a complex support (2), and optically active coating forming light-reflective (3A) and fluorescent (3B) zones on both sides of the frame; an integrated power supply, integrated control unit built into the complex support (2), and optoelectronic lighting units (5) fitted into the side surfaces of the flat frame. In an expedient realization the complex support (2) has a support plate (21) inseparably affixed to the fixed arm (1B) of the frame and comprising two supporting legs (22); a slanted column shaped supporting leg structure (20) affixed to the support plate (21) and the fixed arm (1 B) of the frame with connector (12) in a way that allows rotation along the axis of symmetry and with one or more storage compartments; and adjustable position long supporting legs (23) which can be fixed with respect to the supporting leg structure (20), and where in a given realization the bottom surfaces of the supporting leg structure (20) and/or the free ends of the long supporting legs (23) are magnetic or have magnetic plates (8) as coating.

In an especially well utilizable form of realization a radio wave transmitter operated with a multi-position switch (7) is integrated into the complex support (2), and set for signal connection with a duty center.

The device can expediently be stored in an oblong protective case.

## Description

The subject of the invention is a multi-functional hazard warning triangle device in which the triangular frame is equipped on both sides with optoelectronic lighting units powered by an integrated electricity source and optically active coating bands and has multi-purpose complex support legs. When used instead of or alongside the traditional hazard warning triangle equipped with light-reflective coating on one side it is suitable for more effective warning, thus improving traffic safety.

Vehicles stranded on the road constitute a serious traffic obstacle, thus a source of danger to other vehicles, consequently it is obligatory to use warning signals on vehicles stranded on the road surface. Such is the hazard warning triangle, mandated by international laws, which has to be placed on the road a fair distance behind the stranded vehicle where it can call attention to itself when lit by approaching lights. The detailed technical characteristics of the device generally used are published **in UN-ECE Directive 27** (published by UN-ECE in the English-language publication E/ECE/ 324/-E/ECETRANS/505/Rev.1/Add.26/Rev.1/Amend.1 on February 1^{st}, 1998). The standard hazard warning device must be an open regular triangle, one side of which is equipped with signal red overlays which are suitable for reflecting light in the day and nighttime as well as being fluorescent. While in use the plane of the triangle must be close to perpendicular to the ground, it must be stable and must resist extreme effects of the weather. Expediently the device can be folded up into an elongated shape and can be opened and closed without any tools.

In case the car's electrical system develops a fault and the position and hazard light functions do not work, this lesser signal is the only warning for arriving vehicles. Such passive warning devices can be effective in some cases but they tend to fall over in strong winds, offer no warning to traffic from the opposite direction, and can go unnoticed in poor visibility conditions - strong sunlight, dusk, fog, hard rain or snow or in bends or over crests - by vehicles approaching from the rear.

The solution containing optically active zones on both sides, arranged so that a slot is formed between the nighttime light-reflective part and the daytime light-reflective part on one side in a way that the daytime light-reflective part placed expediently on the lower arm extends at least partway through it when the triangle is folded up for transportation, as published in publication document EP0867338 gives greater warning than the commonplace form of realization with folding arms and light-reflective coating on only one side. The advantageous feature of the solution is the two-sided design and the fold-out leg support system prescribed by Community standards, but our experience shows that the reflection of light and fluorescence do not give enough warning in poor visibility conditions and that the leg solution is also not always satisfactory.

The goal of the invention is to modify known passive hazard warning devices in a way as to make it suitable for providing more effective, active warning, and also making it suitable for more stable placement while fulfilling the minimum requirements of the standard and remaining easily operable. We would expediently wish to use it also for calling help in an emergency besides hazard warning.

We achieve this goal by providing low-consumption, electronically controlled optoelectronic units with integrated power supply on both lateral surfaces of the standard size folding triangle while also coating both lateral surfaces with fluorescent and light reflective zones on the one hand, and formulating a complex support that allows for stable positioning the opened device by the relative positioning of the components on any surface or support.

The solution according to the invention is thus a two-sided multifunctional hazard warning triangle which can be opened and closed, forms a triangle-shaped flat frame when opened, with a complex support affixed to one corner, and which has optically active coating forming light-reflective and fluorescent zones on both sides, characterized by having an integrated power supply and integrated control unit built into the support and optoelectronic lighting units equipped on the side surfaces of the flat frame.

In an expedient form of realization of the device according to the invention the complex support has a support plate with two support legs inseparably affixed to one vertex of the frame, the supporting feet affixed to the fixed vertex of the triangular frame and the supporting plate can be rotated in the vertical axis of symmetry with one or more storage compartments on the slanted column shaped ends, with long supporting legs of adjustable position with respect to the supporting structure, where the bottom surfaces of the support or the free ends of the long supporting legs are magnetic or equipped with magnetic overlays.

In an especially expedient form of realization a radio-wave transmitter operated by a multi-position switch is integrated into the support.

In an expedient form of realization the integrated control unit is a free-running multivibrator equipped with a switch, the power supply is an extra low voltage battery, the lighting units are LEDs placed on the arms of the triangular frame in a linear formation nearly equidistant from each other, mounted flush in between or in the zones with fluorescent and light-reflective coating, and the control unit, the power supply and the transmitter with, operable form the outside are installed in storage compartments equipped with watertight covers that can be opened or closed, with a multi-position switch an electrical connections.

If required, information fields can be formulated on the surface of the device allowing the placement of suitable identifiers; and the device can expediently be stored when folded in a rectangle shaped protective enclosure.

The solution according to the invention can be applied more expediently as compared to solutions known so far, as contrary to the latter, it can reflect light in both directions, it is self-powered, it attracts more attention through the use of flashing lights, and thanks to its multi-purpose complex support, can be set up in a stable fashion in more positions and modes while offering higher resistance to wind than before. The form of realization equipped with a radio-wave transmitter allows for actively calling for help. The customized factory setting of the transmitter allows the surveillance center to identify the person transmitting the signal and the position of the transmitter, while the person calling for assistance can use the multi-position switch to indicate whether it is a mechanical problem or an accident involving personal injury that they require assistance in.

The device according to the invention is fit to satisfy the requirements of international standards through the configuration of its supporting legs, the placement and quality characteristics of its optoelectronic lighting units and optically active zones. It can have significant effects on improving traffic safety through its ease of use and the high degree of warning it provides.

The multi-functional hazard warning triangle and an expedient form of realization will be presented in more detail through figures, where:
Figure 1 is the top view of an expedient form of realization of the device in closed state,
Figure 2 is the view from the back of the realization form seen in Figure 1, in the process of opening-closing with the support closed,
Figure 3 is a frontal view of the realization form seen in Figure 1 upright, supported by the legs,
Figure 4 is a frontal view of the realization form seen in Figure 1 supported by the legs turned outward.

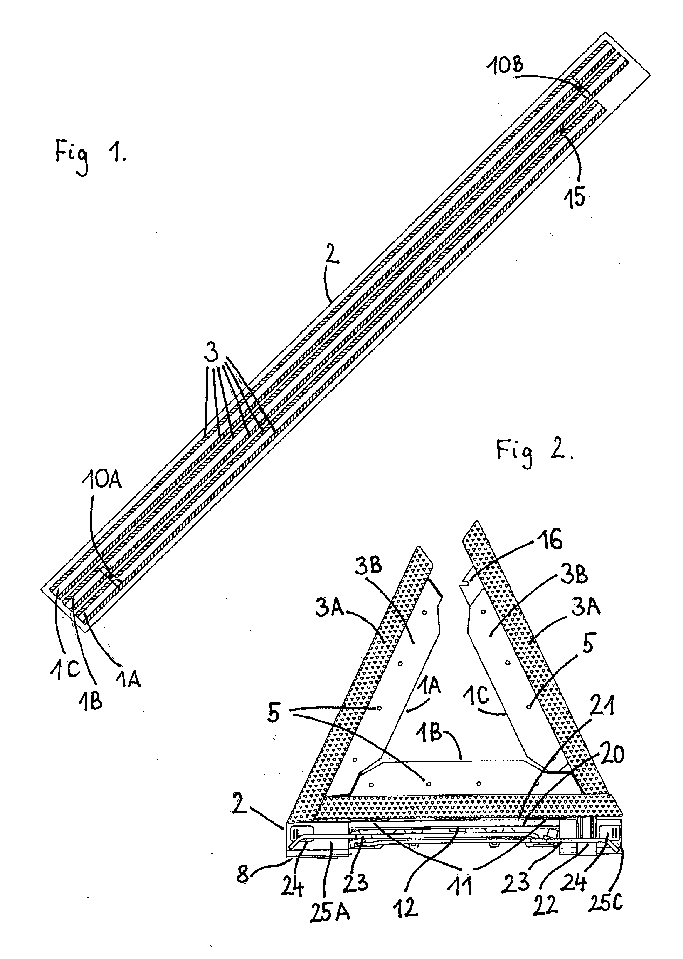

On the top view of the device closed into an oblong rectangle in Figure 1 the complex support (2) is visible silhouetted, as well as the shorter arm (1A), the fixed arm (1B) and the longer arm (1C) of the frame forming a triangle when erected with the optically active coating (3). Fixed arm **1B** is inseparably affixed to complex support **2**; shorter arm **1A** is connected to fixed arm **1B** with connector **10A,** longer arm **1C** is connected to fixed arm **1B** with connector **10B** - expediently studs - allowing for rotation. (Only the sections of connectors 10A and 10B indicated by shading in the figure are visible, the length of the studs in the material of the arms are only indicated.) In the form of realization illustrated the surface element **15 -** expediently a knob or stub - is placed on shorter arm **1A** for rigidly fixing the triangular frame.

Figure 2 shows the expedient form of realization seen in Figure 1 in the process of opening-closing. Through connecting connector **16 -** expediently a slot - formulated on the inside vertex at the free end of longer arm **1C** to surface element **15** located at the free end of shorter arm the triangle-shaped flat frame may be rigidly fixed. Moving shorter arm **1A** and longer arm **1C** are attached to fixed arm **1B** hidden by optically active coating **3.** The fixed arm is connected to supporting plate **21** of complex support **2** with fixed connectors **11,** to the slanted column shaped supporting leg structure **20 -** equipped with one or more storage compartments at the ends - of complex support **2** with connector **12 -** expediently a stud - allowing for axial rotation. Supporting leg structure **20** has adjustable, fixing long support legs **23,** shown in the figure fixed. Optically active coating **3** comprises light reflective zone **3A** and fluorescent zone **3B;** optoelectronic lighting units **5 -** expediently LEDs - placed in a linear formation nearly equidistant from each other are found in fluorescent zone **3B.** The integrated control unit and the power supply, which, in our case comprises two AAA long-life batteries are located in storage compartment **25A** of supporting leg structure **20** closer to shorter arm **1A** in complex support **2.** Storage compartment **25A** is equipped with integrated contacts and a watertight cover **24,** which can be opened and closed. The wires supplying the optoelectronic lighting units are expediently routed along connector **12** from the power supply to the lights. The transmitter, which can be operated from the same power supply as the lights or a separate one is placed in storage compartment **25C -** with watertight cover **24,** which can be opened and closed - of supporting leg structure **20** closer to longer arm **1C** in complex support **2.** In our case magnetic sheets **8** are glued to the feet of supporting leg structure **20** touching the ground, thus the device can be stably affixed to any ferrous metal surface - e.g. on top of the stranded vehicle - without opening complex support **2.**

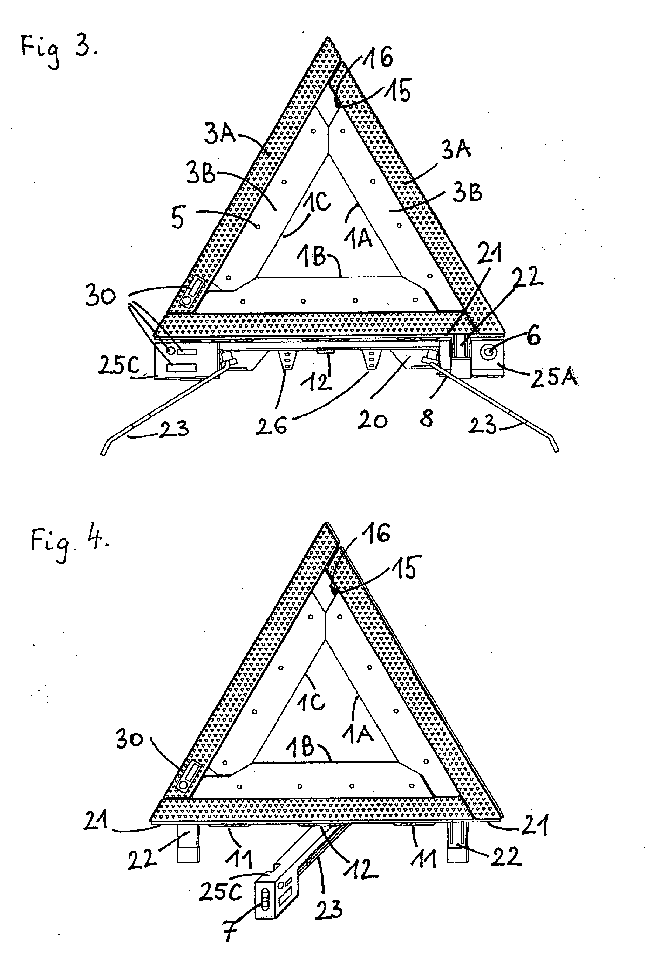

Figure 3 shows the frontal view of the form of realization analyzed so far stood upright with support legs **23** fashioned of thin steel rods bent to shape. Switch **6** to operate the lights from the outside can be seen on supporting leg structure **20.** With the long support legs **23** in the opened position the foot stops **26** of the supporting leg structure **20** become visible. If desired information fields **30** can be found on the frontal surface to allow placing identifiers (permit number, product classification, quality certificate, manufacturer's name), most expediently with signs fashioned from the material of the device.

Figure 4 is the frontal view of the form of realization presented above supported by supporting leg structure **20** folded out. The construction of complex support **2** is shown in more detail than before, comprising support plate **21** formed by two supporting legs **22** connected to fixed arm **1B** of the triangular frame with fixed connectors and the slanted column shaped supporting leg structure **20** with one or more storage compartments inside, connected to fixed arm **1B** and support plate **21** with connector **12 -** ideally a stud - allowing for axial rotation. The long supporting legs **23** of supporting leg structure **20** are shown in this figure in the closed position, snapped into foot receptacles **26.** A multi-position switch **7** is found on the outside surface of storage compartment **25C** containing the transmitter on supporting leg structure **20** for setting the operation of the transmitter.

The two-sided multi-functional hazard warning triangle is thus operated as follows: if needed, the device packed into an oblong shape is taken out, shorter arm **1A** and longer arm **1C** are rotated with respect to fixed arm **1B,** the free ends of the moving arms are rigidly fixed by connecting surface element **15** and connector **16,** then - after judging the environmental conditions the adjustable long supporting legs **23** are opened from complex support **2** and/or supporting leg structure **20** is rotated out to nearly a right-angled position with regards to support plate **21** equipped with supporting legs **22.** If desired, the rigid triangular device can simply be positioned on the metal roof of the device, making use of magnetic plates **8,** leaving complex support **2** intact.

When active warning is required batteries are placed in storage compartment **25A** of the power supply and the flashing warning signal is switched on with switch **6.** Using commonplace batteries the integrated power supply of the example of realization presented is capable of 10 hours of continuous signaling without a change of batteries.

In the case of the forms of realization equipped with a radio wave transmitter and in the case that being within the reception radius of the duty center can be supposed calling for the required level of assistance can be initiated through multi-position switch **7**, on the side of storage compartment **25** containing the transmitter.

The two-sided multi-functional hazard warning triangle according to the invention is inexpensive and simple of construction, and economical to manufacture as its parts can be mass-produced.

Thanks to the clear warning it gives and its multi-functional parts it fills a void in traffic safety.

It can be set in operation and operated without tools or training, thus it has every chance of becoming widespread.

## Claims

1. A two-sided multi-functional hazard warning triangle that can be opened and closed; which forms a flat triangular frame when opened; with a complex support (2) fixed to one of its arms and coating forming optically active, light-reflective (3A) and fluorescent (3B) zones on both sides of the frame, **characterized by** having an integrated power supply, an integrated control unit built into the complex support (2) and optoelectronic lighting units (5) fitted on the outside surfaces of the flat frame.

2. The device according to Claim 1 **characterized by** the complex support (2) having a support plate (21) inseparably affixed to the fixed arm (1 B) of the frame and comprising two supporting legs (22); a slanted column shaped supporting leg structure (20) affixed to the support plate (21) and the fixed arm (1 B) of the frame with connector (12) in a way that allows rotation along the axis of symmetry and with one or more storage compartments; and adjustable position long supporting legs (23) which can be fixed with respect to the supporting leg structure (20), and where in a given realization the bottom surfaces of the supporting leg structure (20) and/or the free ends of the long supporting legs (23) are magnetic or have magnetic plates (8) as coating.

3. The device according to Claim 1 or 2 **characterized by** having a radio wave transmitter integrated into the complex support (2), operated with a multi-position switch and set for signal connection with a duty center.

4. The device according to Claims 1, 2, 3 **characterized by** the integrated control unit being a free-running multivibrator equipped with a switch (6); the power supply being an extra low voltage battery; the optoelectronic lighting units (5) being LEDs placed in a linear formation nearly equidistant from each other on the arms of the triangular frame between and/or in the fluorescent (3B) and light-reflective (3A) zones; and the control unit, the power supply and - in a given realization - the transmitter are installed in storage compartments (25A, 25C) inside the supporting leg structure (20), equipped with switches (6, 7) operable from the outside, electric connections and with covers (24) that can be opened and closed watertight.

5. The device according to Claims 1, 2, 3, 4 **characterized by** information fields (30) suitable for holding identification formulated on the surface of the device; and the folded device being suitable for storage in an oblong protective cover.
